# EUROPÄISCHE PATENTSCHRIFT

(11) **EP 2 333 357 B1**
(45) Veröffentlichungstag und Bekanntmachung des Hinweises auf die Patenterteilung: **07.11.2012**
(21) Anmeldenummer: 09014833.9
(22) Anmeldetag: 30.11.2009
(51) Int. Cl.: F16B 21/16

(54) **Bolzen zum Verspannen aneinander liegender Teile**
Bolt for tensioning sections bordering each other
Boulon de serrage de pièces se trouvant les unes sur les autres

(43) Veröffentlichungstag der Anmeldung: 15.06.2011
(73) Patentinhaber: Siegmund, Bernd, 86845 Grossaitingen (DE)
(72) Erfinder: Siegmund, Bernd, 86845 Grossaitingen (DE)
(74) Vertreter: Seifert, Thomas

(56) Entgegenhaltungen:
- WO-A2-98/31942
- DE-A1- 19 727 099
- DE-A1- 19 917 209
- DE-C1- 19 734 866
- DE-U1- 9 114 220
- DE-U1- 20 104 105
- DE-U1- 20 219 317
- DE-U1- 29 609 881

## Beschreibung

Die Erfindung bezieht sich auf einen Bolzen zum Verspannen aneinander liegender Teile, die Öffnungen aufweisen, umfassend ein bolzenartiges Teil, das von einer Seite der aneinander liegenden Teile in die Öffnungen einführbar ist, eine Schiebehülse, die an einem Ende des bolzenartigen Teils unverdrehbar, jedoch in Längsrichtung verschiebbar angeordnet ist und das bolzenartige Teil nach außen radial überragt, eine Gewindespindel, die in das bolzenartige Teil in Längsrichtung verschraubbar ist, und wenigstens ein Spannelement, vorzugsweise Kugeln, die am einen Ende im Inneren des bolzenartigen Teils angeordnet sind und durch wenigstens eine Öffnung über den Außenumfang des bolzenartigen Teils hinaus bewegbar sind.

Aus der DE 296 09 881 U1 ist ein Bolzen der eingangs genannten Art bekannt, mit dem sich zwei oder mehr aneinander liegende Teile beliebiger Art miteinander verspannen lassen. Derartige Bolzen umfassen ein bolzenartiges Teil, in das von der einen Stirnseite her eine Gewindespindel einschraubbar ist, die an diesem Ende über das bolzenartige Teil übersteht und gleichzeitig als Handrad, meist mit vergrößerten Durchmesser gegenüber dem bolzenartigen Teil dient. An diesem Ende des bolzenartige Teils ist eine Schiebehülse vorgesehen, die unverdrehbar, jedoch in Längsrichtung verschiebbar angeordnet ist und das bolzenartige Teil nach außen radial überragt. Am gegenüberliegenden Ende sind in dem bolzenartigen Teil radial nach außen durchgehende Öffnungen angeordnet, durch die Spannelemente, beispielsweise Kugeln, so weit nach außen bewegbar sind, dass sie über den Außenumfang des bolzenartigen Teils an dieser Stelle vorstehen. Das radiale nach außen Bewegen dieser Spannelemente wird mit Hilfe der Gewindespindel erzielt, die im Bereich der Spannelemente eine konisch, kegelstumpfförmige, gegen das von Handgriff abgewandte Ende sich verjüngende Fläche aufweist. Sobald diese kegelstumpfförmige Fläche mit den Spannelementen in Kontakt gerät und die Gewindespindel weiter vorwärts geschraubt wird, drückt diese Kegelfläche die Spannelemente, meist Kugeln, nach außen, so dass sie über den Außenumfang des bolzenartigen Teils vorstehen. Vor dem Verspannen befinden sich die Spannelemente im zurückgezogenen Zustand innerhalb des bolzenartigen Teils. Dadurch ist es möglich, den Bolzen mit dem die Spannelemente aufweisenden Ende durch die fluchtenden Öffnungen der aneinander liegenden Teile hindurch zu schieben, bis sich die Spannelemente vor der Außenfläche der Teile befinden. Nun wird die Gewindespindel mit Hilfe des Handgriffs vorwärts geschraubt, wodurch zunächst die Spannelemente nach außen gedrückt werden. Der Handgriff der Gewindespindel, welcher einen größeren Durchmesser als der Außendurchmesser des bolzenartigen Teils besitzt, befindet sich noch in Abstand von der Schiebehülse. Durch weiteres Vorwärtsschrauben der Gewindespindel nähert sich die stirnseitige Anschlagfläche des Handgriffs immer mehr der Schiebehülse an und verpreßt diese letztendlich gegen die ausgefahrenen Spannelemente am anderen Ende des Bolzens. Damit ist mit nur wenigen Handgriffen eine einfache, sehr hoch belastbare und spielfreie Verbindung zweier oder mehrerer Teile möglich.

Beispielsweise finden derartige Bolzen in Verbindung mit Zuricht- und Schweisstischen Verwendung, mit denen sich Gegenstände aufspannen und verschweißen oder auf andere Weise bearbeiten lassen. Zu verspannende Teile können die Tischplatte oder Seitenwangen eines Zuricht- und Schweisstischs und ebene oder winkelförmige Zusatzteile sein, die mit Hilfe solcher Bolzen am Tisch befestigt werden können und damit an beliebiger Stelle gerade und rechtwinklige Spannmittel mit Anschlagflächen für das zu fertigende Schweißteil ergeben. Darüber hinaus können solche Bolzen überall dort Verwendung finden, wo zwei oder mehr aneinander liegende Teile miteinander verspannt werden sollen. Die Öffnungen in den aneinander liegenden Teilen können Bohrungen oder Langlöcher sein.

Bei dem erläuterten Stand der Technik ist es jedoch nachteilhaft, dass die Gewindespindel eine Ringnut aufweist, welche zur Aufnahme der Kugeln im entspannten Zustand dient. Dadurch wird zwar verhindert, dass die Kugeln bei gelöster Gewindespindel ganz in das Innere des bolzenartigen teils hinein rutschen können, die Gewindespindel kann zur Wartung und/oder Reparatur des Bolzens aber nicht vollständig heraus geschraubt werden. Außerdem ist es nachteilhaft, dass die Schiebehülse bei gelöster Gewindespindel ganz von dem bolzenartigen Teil geschoben werden kann, was zu einem Verkanten der Schiebehülse führen kann.

Die DE 91 14 220 U1 beschreibt einen anderen Bolzen zum Verspannen aneinander liegender Teile, die Öffnungen aufweisen. Dabei ist es jedoch nachteilhaft, dass die Spannelemente, insbesondere Kugeln bei gelöster Gewindespindel ganz in das Innere des bolzenartigen Teils hinein rutschen können, was zu einem Verkanten bei einem erneuten Anziehen der Gewindespindel führen kann.

Der Erfindung liegt das Problem zugrunde, den Stand der Technik vorteilhaft weiter zu bilden.

Gelöst wird diese Aufgabe mit den Merkmalen des Anspruchs 1. Vorteilhafte Ausgestaltungen der Erfindung ergeben sich aus dem Unteranspruch.

Bei einem Bolzen zum Verspannen aneinander liegender Teile, die Öffnungen aufweisen, umfassend ein bolzenartiges Teil, das von einer Seite der aneinander liegenden Teile in die Öffnungen einführbar ist, eine Schiebehülse, die an einem Ende des bolzenartigen Teils unverdrehbar, jedoch in Längsrichtung verschiebbar angeordnet ist und das bolzenartige Teil nach außen radial überragt, eine Gewindespindel, die in das bolzenartige Teil in Längsrichtung verschraubbar ist, und wenigstens ein Spannelement, vorzugsweise Kugeln, die am einen Ende im Inneren des bolzenartigen Teils angeordnet sind und durch wenigstens eine Öffnung über den Außenumfang des bolzenartigen Teils hinaus bewegbar sind, wird erfindungsgemäß vorgeschlagen, dass ein die radiale Bewegungsmöglichkeit der Kugeln nach innen begrenzender Dorn vorgesehen ist und die Gewindespindel an ihrem Ende eine Ausnehmung für den Dorn aufweist. Damit ist eine unkontrollierte Bewegung der Kugeln im Inneren des bolzenartigen Teils und damit ein mögliches Verkanten beim Anziehen der Gewindespindel vermieden. Gleichzeitig ist ein vollständiges Einschrauben der Gewindespindel in das bolzenartige Teil und damit ein maximal möglicher Dickenbereich beim Verspannen gewährleistet.

Der Dorn kann vorteilhaft an einem mit dem bolzenartigen Teil verbindbaren, beispielsweise einschraubbaren, Gewindestift angeordnet sein. Damit kann der Dorn bei der Montage des Bolzens aus seinen Einzelteilen nach dem Einsetzen der Kugeln mit dem bolzenartigen Teil verbunden werden, beispielsweise eingeschraubt. Zur Wartung und/oder Reparatur kann der Gewindestift wieder entfernt werden, so dass die Kugeln sich vollständig nach innen bewegen und aus dem bolzenartigen Teil herausgenommen werden können.

In der Zeichnung ist die Erfindung anhand eines Ausführungsbeispiels näher erläutert. Es zeigen:
Fig. 1 eine perspektivische Ansicht eines Bolzens,
Fig. 2 ein bolzenartiges Teil des Bolzens,
Fig. 3, 4 verschiedene Ansichten einer Schiebehülse des Bolzens,
Fig. 5 eine Gewindespindel des Bolzens,
Fig. 6 eine vergrößerte Ansicht des Details VI der Fig. 5,
Fig. 7 einen Gewindestift des Bolzens in vergrößerter Ansicht,
Fig. 8 eine Ansicht des geöffneten Bolzens,
Fig. 9 einen Schnitt entlang der Linie IX-IX der Fig. 8,
Fig. 10 eine Ansicht des gespannten Bolzens,
Fig. 11 einen Schnitt entlang der Linie XI-XI der Fig. 10 und
Fig. 12 eine Ansicht in Richtung des Pfeils XII der Fig. 10.

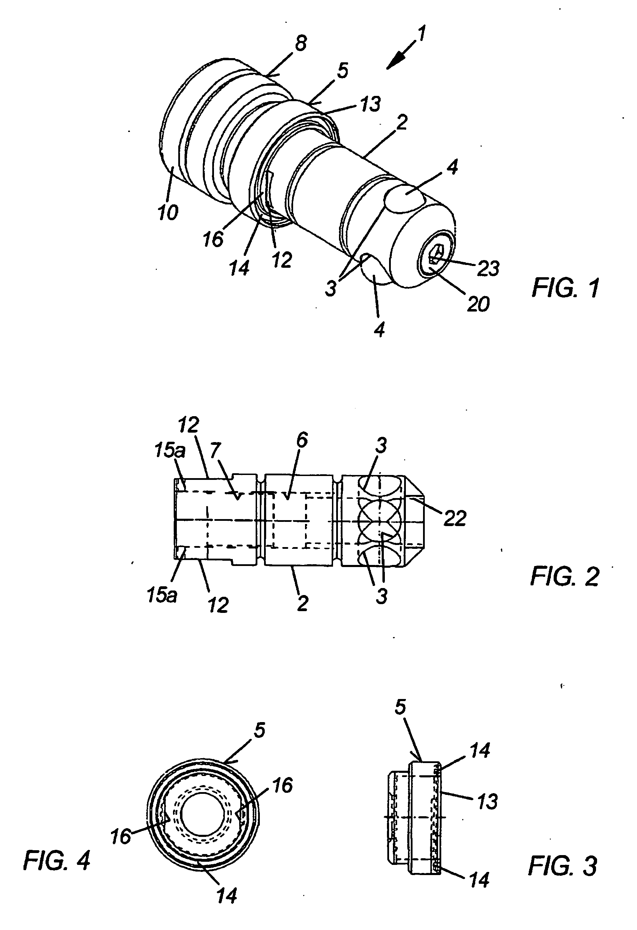

In Fig. 1 ist ein Bolzen 1 zum Verspannen aneinander liegender Teile, die Öffnungen aufweisen, dargestellt, der nach Art eines Feststellbolzens ausgebildet ist. Zur Erläuterung wird ergänzend auf die Fig. 2 bis 7 Bezug genommen, in denen Einzelbestandteile des Bolzens 1 dargestellt sind.

Der Bolzen 1 umfasst ein bolzenartiges Teil 2, das in die Öffnungen von in der Zeichnung nicht dargestellten aneinander liegenden Teilen eingeführt werden kann. Das bolzenartige Teil wird in,einem Endbereich von Öffnungen 3 durchdrungen, in welchen Kugeln 4 als Spannelemente radial hin und her bewegbar sind, aufgrund einer nicht dargestellten Umbördelung am äußeren Rand der Öffnungen 3 oder einer anderen Sicherung, wie etwa eines O-Rings, diese jedoch nicht vollständig verlassen können.

Am anderen Endbereich des bolzenartigen Teils 2 ist eine Schiebehülse 5 unverdrehbar, jedoch in Längsrichtung des bolzenartigen Teils 2 verschiebbar angeordnet und überragt das bolzenartige Teil nach außen radial.

Im Inneren des bolzenartigen Teils 2 ist eine Bohrung 6 vorgesehen, die im oberen Bereich ein Innengewinde 7 aufweist. In die Bohrung 6 ist eine Gewindespindel 8, die ein entsprechendes Außengewinde 9 aufweist, gegenüber dem bolzenartigen Teil 2 verschraubbar. Die Gewindespindel 8 ragt dabei stirnseitig über das bolzenartige Teil 2 und die Schiebehülse 5 hinaus und ist dort zu einem Handgriff 10 verbreitert. Der Handgriff 10 ist drehfest, gegebenenfalls einstückig mit der Gewindespindel 8 verbunden und weist an seinem stirnseitigen Ende einen Innensechskant 11 zur Aufnahme eines entsprechenden Schlüssels mit Hebelarm auf.

Der Handgriff 10 und/oder die Schiebehülse 5 können zur Erhöhung der Griffigkeit gerändelt oder rutschfest beschichtet sein.

Die Schiebehülse 5 ist in Längsrichtung gegenüber dem bolzenartigen Teil 2 entlang von unrunden, vorzugsweise ebenen Schiebeflächen 12 axial verschiebbar, aufgrund der Unrundheit dieser Schiebeflächen 12 jedoch drehfest mit dem bolzenartigen Teil 2 verbunden. Die Schiebehülse 5 besitzt dabei vorzugsweise den gleichen Außendurchmesser wie der Handgriff 10 und insbesondere einen größeren Außendurchmesser als der Durchmesser der Öffnungen in den aneinander liegenden Teilen, so dass die Schiebehülse 5 mit ihrem stirnseitigen Ende 13 an dem zu verspannenden Teil anliegt.

In dem stirnseitigen Ende 13 der Schiebehülse 5 kann eine Nut 14 zur Aufnahme eines in der Zeichnung nicht dargestellten O-Rings vorgesehen sein. Dieser O-Ring bewirkt, dass sich die Schiebehülse 5 und damit auch der bolzenartige Teil 2 nicht ohne weiteres auf dem zu verspannenden Teil verdrehen kann.

Es ist eine den Weg der Schiebehülse 5 begrenzende Sicherungseinrichtung vorgesehen, die die Schiebehülse 5 auf dem bolzenartigen Teil 2 sichert. Dadurch wird gewährleistet, dass die Schiebehülse 5 auch bei gelöster Gewindespindel 8 nicht ganz von dem bolzenartigen Teil geschoben werden kann. Ein Verkanten der Schiebehülse 5 und damit Probleme bei der Handhabung des Bolzens 1 sind damit ausgeschlossen.

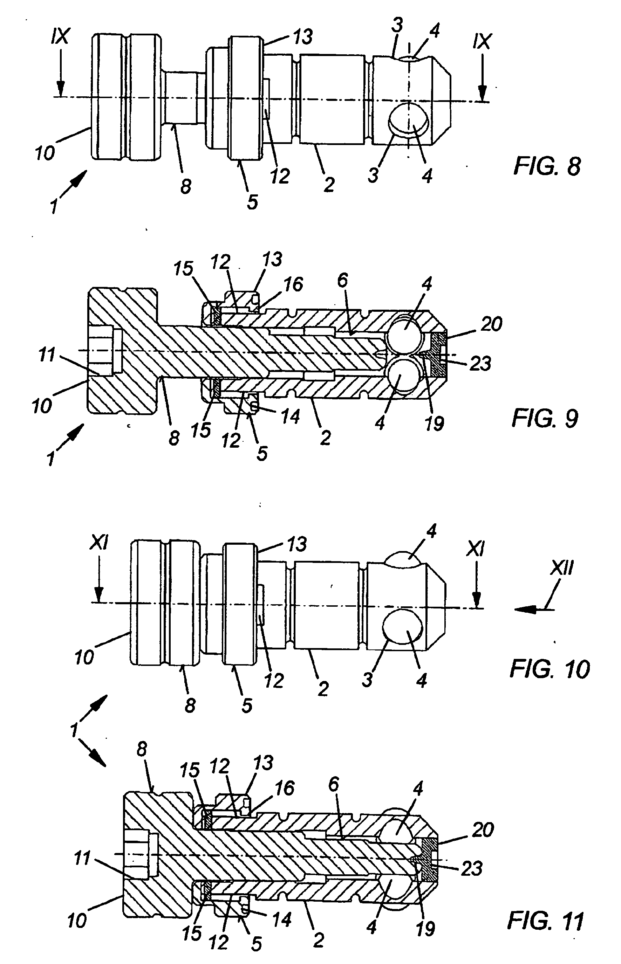

Wie lediglich in den Schnittdarstellungen der Fig. 9 und 11 zu erkennen ist, sind im Bereich der Schiebeflächen 12 Sicherungsstifte 15 durch Bohrungen 15a in dem bolzenartigen Teil 2 eingeführt. Die Sicherungsstifte 15 wirken mit Anschlägen 16 zusammen, die an der Schiebehülse 5 angeordnet sind, und bilden so eine Sicherungseinrichtung, die die Schiebehülse 5 auf dem bolzenartigen Teil 2 sichert. Die Gewindespindel 8 sichert dabei die Lage der Sicherungsstifte 15 in den Bohrungen des bolzenartigen Teils 2. Es versteht sich, dass auch lediglich ein Sicherungsstift 15 oder mehrere Sicherungsstifte vorgesehen werden könnten. Auch eine andere Anordnung der Sicherungsstifte 15 außerhalb der Schiebeflächen 12 ist möglich.

Die Schiebehülse 5 lässt sich damit auf dem bolzenartigen Teil 2 nur so weit verschieben, bis der Anschlag 16 der Schiebehülse 5 an dem Sicherungsstift 15 ansteht, so dass die Schiebehülse 5 auch bei gelöster Gewindespindel 8 nicht ganz von dem bolzenartigen Teil 2 geschoben werden kann. Ein Verkanten der Schiebehülse 5 und damit Probleme bei der Handhabung des Bolzens 1 sind damit ausgeschlossen.

Beim Verspannen greift die Gewindespindel 8 mit ihrem, dem Handgriff 10 gegenüberliegenden Ende 17 an den Kugeln 4 an und verschiebt die Kugeln 4 radial nach außen, wozu das Ende 17 gerundet ausgebildet ist. Es versteht sich, dass auch eine andere Formgebung, beispielsweise eine konische Form möglich wäre.

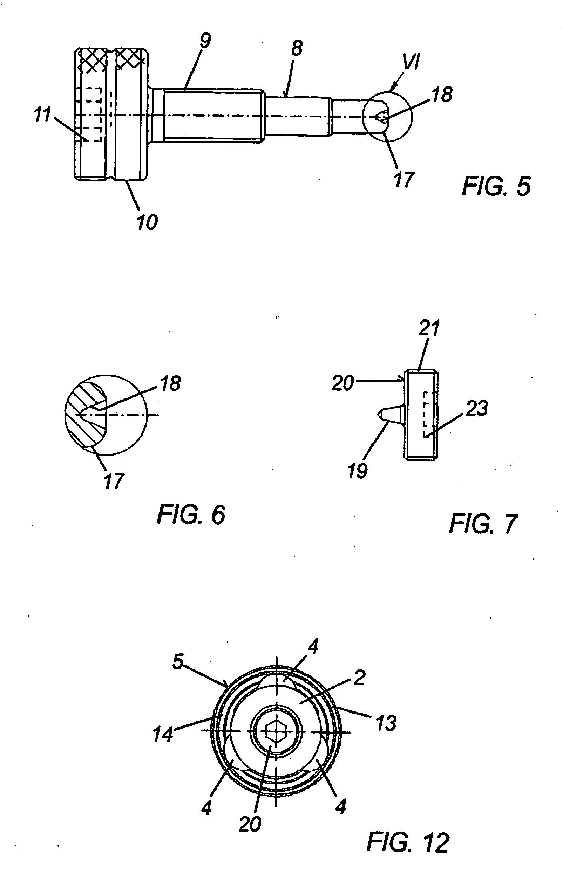

Wie insbesondere aus der Detailansicht der Fig. 6 ersichtlich ist, weist das Ende 17 der Gewindespindel 8 eine axiale Ausnehmung 18 auf, in die beim Verspannen ein Dorn 19 eines in Fig. 7 dargestellten Gewindestifts 20 eingreifen kann. Der Dorn 19 dient dabei zur Begrenzung der radialen Bewegungsmöglichkeit der Kugeln 4 nach innen und muss nicht zwingend mit einem Gewindestift 20 verbunden sein. Der Gewindestift 20 kann nach dem Einsetzen der Kugeln mit seinem Außengewinde 21 in ein Innengewinde 22 des bolzenartigen Teils 2 geschraubt werden, wozu ein Innensechskant 23 in dem Gewindestift 20 vorgesehen ist. Damit kann der Dorn 19 bei der Montage des Bolzens 1 aus seinen Einzelteilen nach dem Einsetzen der Kugeln 4 mit dem bolzenartigen Teil 2 verbunden werden, beispielsweise eingeschraubt. Zur Wartung und/oder Reparatur kann der Gewindestift 20 wieder entfernt werden, so dass die Kugeln 4 sich vollständig nach innen bewegen und aus dem bolzenartigen Teil 2 herausgenommen werden können.

Bei dem in den Fig. 8 und 9 dargestellten geöffneten Zustand des Bolzens 1 befinden sich die Kugeln 4 im Inneren des bolzenartigen Teils 2, so dass das bolzenartige Teil 2 durch die Öffnungen in zu verspannenden aneinander liegenden Teilen hindurch geführt werden kann, bis das Ende 13 der Schiebehülse 5 an einem der aneinander liegenden Teile anliegt. Dabei begrenzt der Dorn 19 die radiale Bewegungsmöglichkeit der Kugeln 4 nach innen, so dass eine unkontrollierte Bewegung der Kugeln 4 im Inneren des bolzenartigen Teils 2 und damit ein mögliches Verkanten beim Anziehen der Gewindespindel 8 vermieden werden. Gleichzeitig ist ein vollständiges Einschrauben der Gewindespindel 8 in das bolzenartige Teil 2 und damit ein maximal möglicher Dickenbereich beim Verspannen gewährleistet.

Der Bolzen 1 wird gespannt, wie dies in den Fig. 10 und 11 dargestellt ist, indem mit Hilfe des Handgriffs 10 die Gewindespindel 8 vorwärts, d.h. in den Fig. 10 und 11 nach rechts gegenüber dem bolzenartigen Teil 2 verschraubt wird. Dadurch kommt das Ende 17 der Gewindespindel 8 in Kontakt mit den Kugeln 4 und drückt diese radial nach außen. Beim weiteren Verschrauben der Gewindespindel 8 kommt schließlich der Handgriff 10 in Kontakt mit der Schiebehülse 5 und verschiebt diese auf dem bolzenartigen Teil 2 in Richtung der Kugeln 4, bis die nicht dargestellten aneinander liegenden Teile zwischen den Kugeln 4 und dem stirnseitigen Ende 13 der Schiebehülse 5 verspannt sind. Mit dem Bolzen 1 ist es also möglich, aneinander liegende Teile mit unterschiedlichen Gesamtdicken miteinander zu verspannen.

Wie sich aus der Darstellung der Fig. 11 ergibt, greift bei vollständig in das bolzenartige Teil 2 eingeschraubter Gewindespindel 8 der Dorn 19 des Gewindestifts 20 in die Ausnehmung 18 des Endes 17 der Gewindespindel 8 ein.

### Bezugszeichenliste

- 1: Bolzen
- 2: bolzenartiges Teil
- 3: Öffnungen
- 4: Kugel
- 5: Schiebehülse
- 6: Bohrung
- 7: Innengewinde von 2
- 8: Gewindespindel
- 9: Außengewinde von 8
- 10: Handgriff
- 11: Innensechskant
- 12: Schiebeflächen
- 13: stirnseitiges Ende von 5
- 14: Nut
- 15: Sicherungsstift
- 15a: Bohrungen
- 16: Anschlag an 5
- 17: Ende von 8
- 18: Ausnehmung in 17
- 19: Dorn
- 20: Gewindestift
- 21: Außengewinde von 20
- 22: Innengewinde von 2
- 23: Innensechskant von 20

## Patentansprüche

1. Bolzen (1) zum Verspannen aneinander liegender Teile, die Öffnungen aufweisen, umfassend
ein bolzenartiges Teil (2), das von einer Seite der aneinander liegenden Teile in die Öffnungen einführbar ist, eine Schiebehülse (5), die an einem Ende des bolzenartigen Teils (2) unverdrehbar, jedoch in Längsrichtung verschiebbar angeordnet ist und das bolzenartige Teil (2) nach außen radial überragt,
eine Gewindespindel (8), die in das bolzenartige Teil (2) in Längsrichtung verschraubbar ist, und
wenigstens ein Spannelement, nämlich Kugeln (4), die an einem Ende im Inneren des bolzenartigen Teils (2) angeordnet sind und durch wenigstens eine Öffnung (3) über den Außenumfang des bolzenartigen Teils (2) hinaus bewegbar sind,
**dadurch gekennzeichnet, dass**
ein die radiale Bewegungsmöglichkeit der Kugeln (4) nach innen begrenzender Dorn (19) vorgesehen ist und die Gewindespindel (8) an ihrem Ende (17) eine Ausnehmung (18) für den Dorn (19) aufweist.

2. Bolzen (1) nach Anspruch 1, **dadurch gekennzeichnet, dass** der Dorn (19) an einem mit dem bolzenartigen Teil (2) verbindbaren, beispielsweise einschraubbaren, Gewindestift (20) angeordnet ist.

## Claims

1. Bolt (1) for clamping parts which adjoin one another and which have openings, comprising
a bolt-like part (2) which can be inserted into the openings from one side of the adjoining parts,
a sliding sleeve (5) which is arranged non-rotatably, but displaceably in the longitudinal direction, at one end of the bolt-like part (2) and projects radially outwardly beyond the bolt-like part (2),
a threaded spindle (8) which can be screwed into the bolt-like part (2) in the longitudinal direction, and
at least one clamping element, specifically balls (4) which are arranged at one end inside the bolt-like part (2) and can be moved through at least one opening (3) beyond the outer circumference of the bolt-like part (2),
**characterized in that**
a mandrel (19) which inwardly delimits the radial possibility of movement of the balls (4) is provided, and the threaded spindle (8) has at its end (17) a recess (18) for the mandrel (19).

2. Bolt (1) according to Claim 1, **characterized in that** the mandrel (19) is arranged on a threaded pin (20) which can be connected to, for example screwed into, the bolt-like part (2).

## Revendications

1. Boulon (1) pour serrer des pièces situées les unes contre les autres, qui présentent des ouvertures, comprenant
une partie en forme de boulon (2) qui peut être introduite dans les ouvertures par un côté des pièces situées les unes contre les autres,
un manchon coulissant (5) qui est disposé de manière non rotative à une extrémité de la partie en forme de boulon (2) mais qui peut être déplacé dans la direction longitudinale et qui dépasse radialement vers l'extérieur de la partie en forme de boulon (2),
une broche filetée (8) qui peut être vissée dans la direction longitudinale dans la partie en forme de boulon (2), et
au moins un élément de serrage, à savoir des billes (4), qui sont disposées à une extrémité à l'intérieur de la partie en forme de boulon (2) et qui sont déplaçables à travers au moins une ouverture (3) au-delà de la périphérie extérieure de la partie en forme de boulon (2),
**caractérisé en ce**
**qu'**il est prévu un ergot (19) limitant vers l'intérieur la mobilité radiale des billes (4), et la broche filetée (8) présente à son extrémité (17) un évidement (18) pour l'ergot (19).

2. Boulon (1) selon la revendication 1, **caractérisé en ce que** l'ergot (19) est disposé sur une tige filetée (20) pouvant être connectée, par exemple par vissage, à la partie en forme de boulon (2).
